Europäisches Patentamt

European Patent Office

Office européen des brevets

(11) Numéro de publication : **0 356 274 B1**

(12) **FASCICULE DE BREVET EUROPEEN**

(45) Date de publication du fascicule du brevet :
**11.11.92 Bulletin 92/46**

(51) Int. Cl.$^5$ : **A23C 19/064, A01J 25/16**

(21) Numéro de dépôt : **89402083.3**

(22) Date de dépôt : **21.07.89**

(54) **Procédé de fabrication de fromages à pâte molle à forte teneur en magnésium et fromages obtenus.**

(30) Priorité : **09.08.88 FR 8810742**

(43) Date de publication de la demande :
**28.02.90 Bulletin 90/09**

(45) Mention de la délivrance du brevet :
**11.11.92 Bulletin 92/46**

(84) Etats contractants désignés :
**AT BE CH DE ES FR GB GR IT LI LU NL SE**

(56) Documents cités :
**EP-A- 0 112 260
FR-A- 1 315 867
FR-A- 1 528 581
FR-A- 2 574 628
US-A- 2 793 122**

(73) Titulaire : **SAINT-HUBERT Industrie Laitière
870, rue Denis-Papin Zone Industrielle
F-54710 Ludres Meurthe-et-Moselle (FR)**

(72) Inventeur : **Perrin, Jean
21 Rue des Carosses
F-54136 Bouxières aux Dames (FR)**
Inventeur : **Dupont, Bernard
870 Rue Denis-Papin Zone Industrielle
F-54710 Ludres (FR)**
Inventeur : **Bruard, Jacques
13 Rue des Magnolias
F-54220 Malzeville (FR)**

(74) Mandataire : **Chevallier, Robert Marie Georges
et al
Cabinet BOETTCHER 23, rue La Boétie
F-75008 Paris (FR)**

EP 0 356 274 B1

## Description

L'invention se rapporte à un procédé de fabrication de fromages à pâte molle, parmi lesquels le camembert et le coulommiers peuvent être cités à titre d'exemple et sans intention d'exclusion des autres fromages analogues qui, au moment de leur mise en vente, ont une teneur pratiquement nulle en sodium et une teneur élevée en magnésium (de l'ordre de 88 mg pour 100 g de fromage) comparativement aux fromages classiques à pâte molle du même genre.

L'invention concerne aussi un bac de salage utilisable dans la mise en oeuvre du procédé et les fromages obtenus selon le procédé de fabrication.

On connaît déjà, par le document FR-A-2.574.629 un procédé de fabrication d'un fromage hyposodé. Mais, bien que ce procédé soit présenté comme applicable à tous les fromages y compris les fromages à pâte molle comme le brie et le camembert, il n'est décrit en détail que pour son application aux fromages à pâte pressée soit cuite (comté, emmenthal, fribourg,...) soit non cuite (cantal, tomme, râclette, mimolette, édam, etc...).

Or, les fromages à pâte pressée sont obtenus par un procédé qui comporte une opération de moulage sous presse du caillé qui est ainsi transformé en meules épaisses et plutôt fermes. L'opération de salage a lieu ensuite dans le document en question cette opération est exécutée, ainsi qu'il est classique, par frottage de la surface de la meule, tous les deux jours, pendant la durée de l'affinage du fromage.

Quand il s'agit de fromages à pâte molle, le salage ne peut se faire par frottage de la surface à l'aide de sel. Le plus couramment le salage de ces fromages est exécuté par trempage dans un bac contenant une solution de sel ou par aspersion de sel sec. Une pâte molle trempée dans une solution de sel absorbe le sel rapidement en quantité beaucoup plus grande qu'un fromage à pâte pressée.

L'emploi, pour la préparation de la solution de sel, de la même solution concentrée riche en chlorure de magnésium hexahydraté (sous-produit de l'extraction physique du chlorure de sodium contenu naturellement dans l'eau de mer) mentionné dans le document précité, aboutit à un fromage trop riche en sel de magnésium à goût amer, qu'il n'est pas possible de mettre en vente dans le commerce.

La présente invention a donc eu pour but principal, après constatation faite que le procédé du document précité n'est pas applicable aux fromages à pâte molle, de chercher un procédé utilisable pour la fabrication de tous les fromages à pâte molle à teneur pratiquement nulle en chlorure de sodium, contenant en remplacement de ce dernier du sel de magnésium et n'ayant pas de goût amer susceptible de déplaire au consommateur.

Avant de décrire le procédé de l'invention, on rappellera les opérations essentielles de la fabrication classique des fromages à pâte molle en se référant, à titre d'exemple, au camembert.

Après le contrôle de la qualité du lait et sa standardisation, il est procédé à une prématuration de l'ordre de douze heures avec un ensemencement en ferments de 0,5 % à 0,7 % à une température comprise entre 8 et 12°C.

Avant fabrication une maturation destinée à mettre les micro-organismes en état d'agir au mieux de leurs performances est faite à 35°C - 36°C avec une adjonction supplémentaire de 1 à 2 % de ferments et ceci sur une durée comprise entre 20 et 50 minutes.

Puis le lait ainsi préparé est envoyé en fabrication où la presure est ajoutée au lait à une température de 34°C environ pour provoquer la coagulation du caillé. Cette température est favorable aux ferments mésophiles. Après la prise en masse du caillé, ce dernier est tranché c'est-à-dire découpé en petits cubes au cours d'une opération de tranchage ce qui facilite l'exsudation du lactosérum. Ensuite, ces petits cubes servent à garnir des moules perforés qui donnent au fromage sa forme définitive. Les moules perforés sont conservés sur des plateaux d'égouttage pendant 24 heures ; pendant cette durée ils sont retournés plusieurs fois. Les fromages sont alors extraits des moules et sont soumis à une opération de salage par pulvérisation de sel sec qui provoque une exsu dation complémentaire de lactosérum ou par immersion statique dans des bacs qui contiennent une solution saturée de chlorure de sodium, c'est-à-dire contenant 300 g de sel par l d'eau, la durée de cette immersion allant de 25 min à 45 min, après quoi les fromages sont laissés sur des claies dans une salle de ressuyage où ils se sèchent, puis ils subissent une projection de pénicillium candidum après laquelle commence la phase d'affinage de plusieurs jours à l'issue de laquelle on constate que le fromage prêt à la vente contient de 1,8 à 2,2 g environ de chlorure de sodium pour 100 g de fromage.

Quand il est envisagé de remplacer le chlorure de sodium par le chlorure de magnésium, il est avantageux d'utiliser une source économique de ce dernier, ainsi qu'il est connu dans le domaine de la production des sels ; cette source, sous-produit de l'extraction du chlorure de sodium de l'eau de mer, a la composition suivante (en g/l) :

$MgCl_2, 6H_2O$      800
$MgSO_4, 7H_2O$      136
$NaCl$               10

KCl         10

Le remplacement pur et simple de la solution classique saturée en chlorure de sodium par une solution concentrée en chlorure de magnésium, conduit à un fromage qui a un goût d'amertume prononcé le rendant impropre à la vente.

On obtient un fromage à pâte molle pratiquement dépourvu de chlorure de sodium en remplaçant ce sel par du chlorure de magnésium, pour parvenir à un fromage dépourvu d'amertume nuisible, quand on apporte aux opérations du procédé classique de fabrication, les opérations nouvelles supplémentaires suivantes dont les effets se combinent pour l'obtention du résultat.

Au moment de l'opération dite du tranchage consistant à couper le caillé en petits cubes, on procède à un brassage et un lavage pendant 10 à 40 min. Cette durée peut être prolongée mais le résultat n'en est pas amélioré significativement. Pendant le brassage, les cubes perdent du lactosérum dans une proportion mesurable et leur volume se réduit de près de la moitié. Cet état final du caillé sert à déterminer la durée du brassage ; ce dernier doit être poursuivi jusqu'à l'obtention de cet état final.

Le brassage peut être exécuté manuellement mais il est préférable que, à partir du caillé coagulé en masse, le brassage soit exécuté mécaniquement, à l'aide d'un agitateur équipé de pales d'agitation.

Pendant l'opération de brassage concourant à réduire le volume des cubes de caillé, on procède à un lavage des grains de caillé par une circulation d'eau à travers la cuve de brassage. Cette circulation de l'eau pourrait avoir lieu par intermittences pendant le brassage mais il est préférable d'assurer cette circulation de l'eau à travers la cuve pendant toute la durée de l'opération de brassage.

Le résultat de cette opération est une élimination beaucoup plus poussée du lactosérum (par rapport à celle du procédé classique) et par conséquent du lactose. Le brassage et le lavage du caillé diluent le lactosérum, ce qui favorise un échange osmotique entraînant l'exsudation du lactose à laquelle succède une accélération par les micro-organismes lactiques de l'hydrolyse du lactose.

En conséquence, le caillé au moment de sa mise en moules contient moins de lactose. De ce fait le lactose restant est transformé plus complétement en acide lactique, par action microbienne, au cours des opérations ultérieures.

Cette première opération supplémentaire selon l'invention contribue à l'élimination de l'amertume indésirable du fromage riche en chlorure de magnésium.

Conformément à l'invention, la solution concentrée en chlorure de magnésium dont la composition est donnée plus haut n'est pas utilisée telle quelle mais elle est soumise préalablement à une opération d'élimination du sulfate de magnésium. Il serait possible d'éliminer totalement ce dernier sel mais cette opération deviendrait trop coûteuse de sorte qu'il est préférable d'utiliser un groupe de sels, riche en chlorure de magnésium, dont la teneur en sulfate de magnésium a été abaissée à une valeur de l'ordre de 3% alors que sa teneur initiale est de l'ordre de 7% (sous forme anhydre). Une telle solution appauvrie en sulfate de magnésium est disponible dans le commerce. L'emploi de cette solution contribue à la suppression de l'amertume indésirable du fromage obtenu.

Conformément à l'invention, le salage du fromage à l'aide de cette solution se fait par immersion pendant une durée de 2 à 3 min, à une température de 13 à 15°C, dans un bac allongé de faible profondeur à l'intérieur duquel le bain de salage et les fromages à saler circulent à contre-courant sur une chaîne de translation. Ce processus de passage à contre-courant est connu en soi mais il est inhabituel en fromagerie. Il a l'avantage de permettre un bon contrôle de la quantité de sels, et notamment de chlorure de magnésium, absorbée par le fromage.

Le bain de salage contient, en poids, 1/3 de sels pour 2/3 d'eau. Les sels, désignés ainsi globalement, ont typiquement la composition donnée ci-dessous qui est, bien entendu approximative dans la solution appauvrie du commerce :

|  | g / l |
| --- | --- |
| $MgCl_2, 6H_2O$ | 800 |
| $MgSO_4$ | 26,34 |
| KCl | 10 |
| NaCl | 10 |

La quantité de sulfate de magnésium équivaut à un pourcentage de 3,11 %. Dans le bain de salage le sulfate de magnésium est naturellement en proportion plus réduite par suite de la dilution dans l'eau. Dans le groupe de sels défini ci-dessus le pourcentage de sulfate de magnésium peut aller de 3 à 3,5 %.

On remarquera que l'opération de salage à contre-courant a une durée considérablement réduite en comparaison de la durée de la même opération classique par immersion statique dans une solution saturée en chlorure de sodium au cours de laquelle les fromages restent imergés pendant une durée de 20 à 45 min.

De manière surprenante le salage à contre-courant conforme à l'invention, dans un bain de salage qui n'est pas saturé en chlorure de magnésium, permet d'observer une durée d'immersion très courte (de 2 à 3 min ainsi qu'on l'a déjà dit) tout en procurant un salage très régulier des fromages.

Après le salage de la façon qui vient d'être décrite, le fromage subit l'opération classique de ressuyage sur claie de haloir, puis vaporisation de penicillum candidum et affinage pendant une durée de 8 à 9 jours, ce qui correspond à deux jours supplémentaires d'affinage en comparaison du procédé classique au chlorure de sodium.

Les fromages obtenus ont une fleur bien fournie et très blanche, une pâte homogène légèrement sèche, un goût différent d'un fromage au chlorure de sodium mais dépourvu d'amertume. Leur teneur en chlorure de magnésium est de 0,35 g environ pour 100 g de fromage.

On a expliqué plus haut que selon le procédé classique au chlorure de sodium l'adjonction de la présure se fait à une température du lait de 34°C environ.

Conformément à l'invention il est souhaitable, mais non strictement obligatoire, d'ajouter la présure à une température de 38°C du lait et de procéder à une maturation à environ 40°C. Cette différence des températures paraît faible mais elle a pour conséquence de favoriser le développement des ferments thermophiles au détriment des ferments mésophiles. Les premiers ont une plus grande activité dans l'hydrolyse du lactose, ce qui est favorable à une meilleure élimination de ce dernier, comme il est souhaité dans le cadre de l'invention.

Un bac de salage utilisable pour la mise en oeuvre de l'opération de salage est décrit ci-après. Ce bac est allongé et peu profond; il possède deux parois extrêmes inclinées vers l'extérieur d'un angle de 20° environ par rapport à l'horizontale ; il est équipé d'un convoyeur immergé circulant dans un sens d'une extrémité à l'autre du bac et ce dernier a à une extrémité un orifice inférieur de vidange auquel est raccordée une pompe dont le côté refoulement est raccordé à une conduite supérieure qui dirige la solution de salage au niveau supérieur du bac, en retour, à l'extrémité opposée, la solution circulant ainsi en sens opposé à celui du convoyeur.

On donnera maintenant une description plus détaillée de ce bac en se reportant aux dessins annexés dans lesquels :

- la figure 1 est une vue générale en élévation d'un bac utilisable dans le procédé selon l'invention,
- la figure 2 est une vue partielle en coupe selon II-II de la figure 1,
- les figures 3 et 4 sont des vues partielles en perspective d'une extrémité du même bac.

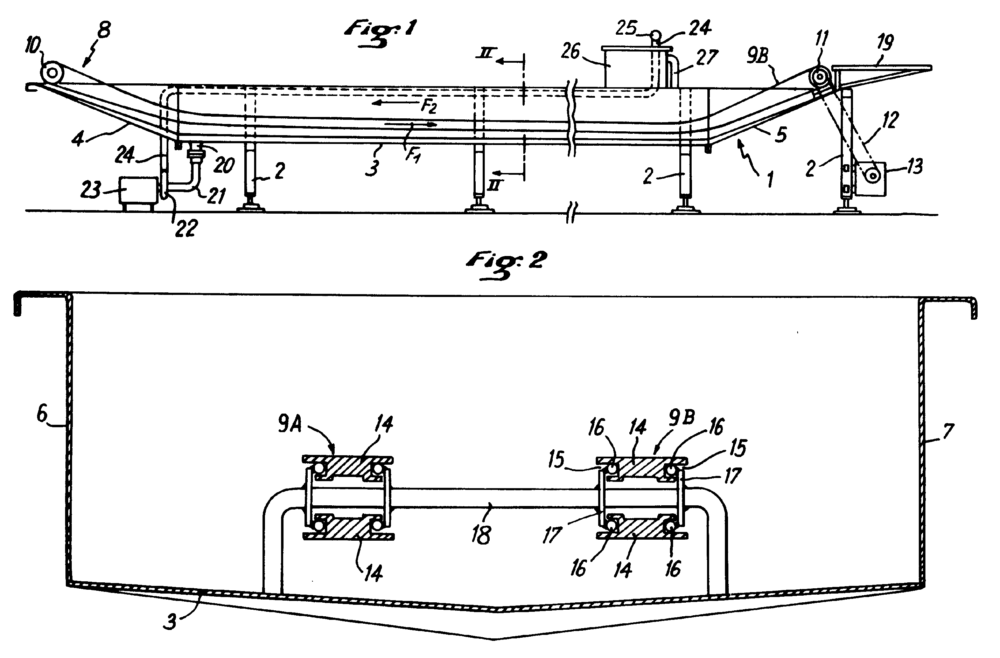

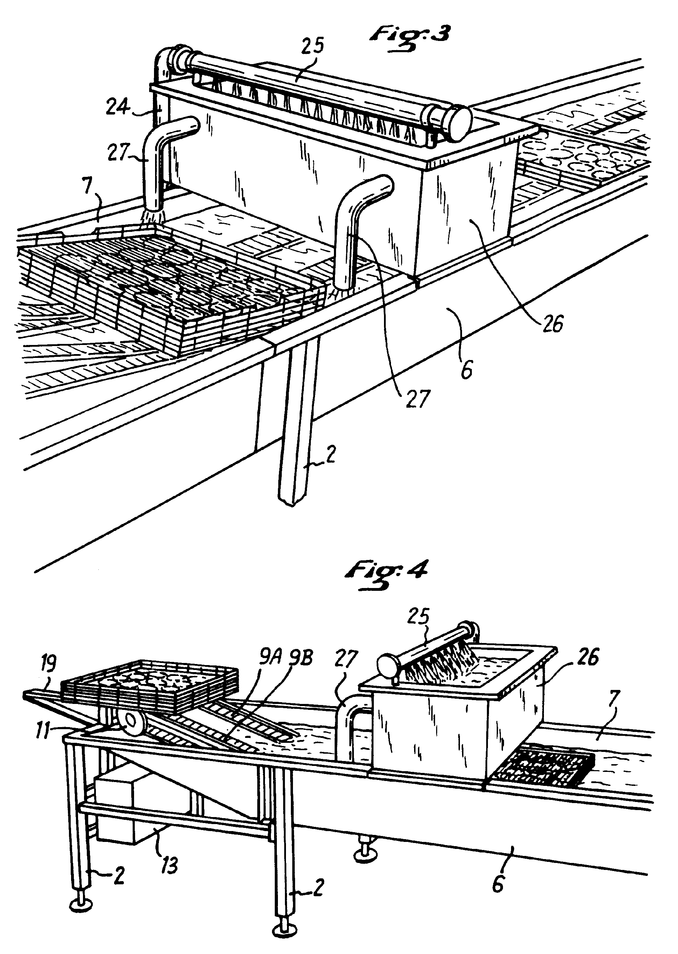

Le bac désigné par la référence générale 1 est monté sur des pieds 2 qui le surélèvent à une hauteur convenable. Il a un fond 3 sensiblement horizontal et à ses extrémités opposées en sens longitudinal il a deux flancs 4, 5 inclinés de 20° sur l'horizontale vers l'extérieur du bac. En sens transversal, les deux parois opposées 6, 7 sont verticales (figure 2).

Un convoyeur 8 a deux bandes sans fin 9A, 9B espacées, parallèles, qui passent autour d'un premier rouleau extrême 10 et d'un second rouleau extrême 11. Ces deux rouleaux sont supportés au-dessus du niveau du bord supérieur du bac ; le premier rouleau 10 est libre en rotation, le second rouleau 11 est relié fonctionnellement par une chaîne 12 à un groupe moto-réducteur 13 fixé à un pied extrême 2. Ces rouleaux extrêmes 10,11 sont placés au-dessus de l'extrémité la plus élevée des flancs inclinés 4, 5. Dans l'intervalle qui les sépare, les deux bandes sans fin sont guidées pour s'étendre à faible distance au-dessus des flancs inclinés 4, 5 et du fond 3. A cette fin, chaque bande est composée de maillons articulés successifs 14 en matière plastique (figure 2) qui ont dans leurs deux faces latérales opposées une rainure longitudinale 15. Dans ces rainures opposées 15 sont engagés des fers ronds 16 de guidage. Il existe une paire de deux fers ronds opposés 16, dans un plan horizontal, pour chacun des brins supérieur et inférieur de chaque bande sans fin. En sens vertical deux fers ronds 16 de guidage situés d'un même côté des maillons articulés 14 sont soudés à une plaquette verticale de soutien correspondante 17. Dans un même plan transversal du bac 1 les plaquettes de soutien 17 sont traversées par un support transversal 18 qui passe entre les brins supérieur et inférieur de chaque bande 9A, 9B. A ses parties extrêmes opposées ce support transversal 18 est plié vers le bas à 90° et il est fixé par ses extrémités au fond 3 du bac 1. Dans le sens de la longueur de ce dernier il existe un nombre suffisant de supports transversaux 18 espacés. A l'extrémité du bac 1 où se trouve le groupe moto-réducteur 13 le flanc incliné 5 est équipé d'une tablette horizontale 19 qui est fixée au niveau atteint par les bandes sans fin 9A, 9B passant autour du second rouleau moteur 11. Pendant le fonctionnement le brin supérieur des bandes sans fin 9A, 9B est entraîné vers la tablette 19, comme indiqué par une flèche F 1 sur la figure 1. La plus grande partie de la longueur du convoyeur 8 est immergée dans le bac 1.

A l'extrémité du bac 1 opposée à celle où se trouve le groupe moto-réducteur 13, le fond 3 a un orifice de vidange 20 qui est raccordé par une conduite 21 à l'entrée d'aspiration d'une pompe 22 accouplée à un moteur 23 et dont le côté de refoulement est raccordé à une conduite 24. Celle-ci s'étend le long du bac 1 jusqu'au voisinage de l'autre extrémité de ce dernier où elle s'élève verticalement. Ensuite cette conduite 24 est prolongée par une rampe 25 disposée transversalement au bac 1, au-dessus d'une cuvette 26 qui est elle-même montée en sens transversal pour reposer sur les bords supérieurs des parois verticales 6, 7 du bac. La rampe 25 est percée à sa partie inférieure, au-dessus de la cuvette 26. A partir de celle-ci deux tubes 27 de trop plein pour cette cuvette et de retour de la solution descendent en direction du bac 1 pour s'arrêter à l'intérieur de celui-ci, au-dessus du niveau que doit avoir la solution de salage ; ce niveau est tenu constant pendant le fonctionnement, à 8 cm environ du bord supérieur du bac 1.

La solution de salage est mise en circulation pendant l'opération de salage au moyen de la pompe 22, dans le sens indiqué par une flèche F2 sur la figure 1, opposé au sens de déplacement F1 du brin supérieur des deux bandes 9A, 9B du convoyeur.

Pendant le fonctionnement, des clayettes métalliques portant chacune de 20 à 30 fromages selon la taille de ces derniers sont posées en succession sur les brins supérieurs des bandes 9A, 9B, juste après le premier rouleau 10. Le convoyeur les immerge dans la solution de salage, les déplace le long du bac jusqu'à l'extrémité opposée et les fait sortir de la solution à l'extrémité opposée pour les faire glisser sur la tablette 19.

La durée de l'immersion est de l'ordre de 2 à 3 min selon la taille des fromages, plus précisément elle est de 2,5 min pour des fromages de 250g. La vitesse du convoyeur et la longueur du bac sont choisies en fonction de cette durée d'immersion. Dans un exemple de réalisation, le bac avait une longueur totale de 7,75 m et une largeur de 1,60 m. La teneur en sels de la solution de salage est tenue constante pendant toute la durée du fonctionnement; L'avantage de la cuvette 26 est de faciliter le contrôle et le maintien de la constance de la concentration et du volume de la solution ; elle permet aussi de la filtrer si on le juge utile.

On remarquera, en complément à ce qui a été expliqué plus haut, qu'il serait possible de préparer une solution de chlorure de magnésium pur non hydraté en faisant dissoudre directement ce sel dans de l'eau. Dans ce cas, sa concentration dans la solution devrait être de 700 g pour 1 700 g d'eau, environ. Cette variante est plus coûteuse; elle peut être adoptée lorsque l'approvisionnement en chlorure de magnésium pur est possible à un coût économiquement admissible.

On notera aussi que le convoyeur équipant le bac de salage pourrait être d'un autre type ayant deux parties extrêmes disposées verticalement associées à une partie horizontale immergée dans le sens de la longueur du bac, une partie extrême verticale déplaçant des clayettes de fromages à saler jusqu'à la partie horizontale immergée et l'autre partie extrême reprenant ces clayettes pour les sortir du bac de salage. Ce système de bac réduit au maximum les inconvénients de volume. Il permet le cas échéant d'éliminer la solution après salage et de l'envoyer dans une station de traitement des eaux usées de type biologique sans perturber le cycle de celle-ci.

## Revendications

1. Procédé de fabrication de fromages à pâte molle à teneur pratiquement nulle en sodium et à teneur élevée en magnésium, comprenant une opération d'adjonction de présure, une opération de tranchage du caillé, une opération de salage par immersion dans une solution riche en chlorure de magnésium, caractérisée en ce que l'opération de tranchage du caillé est suivie d'un brassage et d'un lavage pendant une durée de 10 min à 40 min jusqu'à la réduction du caillé à environ la moitié de son volume, l'opération de salage est exécutée dans une solution comprenant environ en poids 700 g de chlorure de magnésium pour 1700g d'eau et elle a lieu par immersion dans un bac et par déplacement à contre-courant de cette solution et des fromages à saler pendant une durée de 2 min à 3 min selon la taille des fromages, à une température de 13° à 15°C.

2. Procédé selon la revendication 1, caractérisé en ce qu"on utilise pour la préparation de la solution de salage une solution d'un groupe de sels ayant substantiellement la composition suivante, en poids :

   $MgCl_2$, $6H_2O$      800 g/l
   $MgSO_4$               26,34 g/l
   KCl                 10 g/l
   NaCl                10 g/l

   dans laquelle le pourcentage de $MgSO_4$ est compris entre 3 et 3,5 % et ce groupe de sels de ladite solution est mis dans la solution de salage dans le rapport, en poids, de 1/3 de sels pour 2/3 d'eau.

3. Procédé selon la revendication 1, caractérisé en ce que l'opération d'adjonction de la présure a lieu à une température du lait de 38°C.

4. Procédé selon la revendication 1, caractérisé en ce que l'opération de brassage est exécutée mécaniquement à l'aide d'un agitateur à pales.

5. Fromage à pâte molle susceptible d'être obtenu selon le procédé de l'une quelconque des revendications 1 à 4.

## Patentansprüche

1. Verfahren zur Herstellung von Weichcremekäse ohne einen wesentlichen Natriumgehalt und mit erhöhtem Magnesiumgehalt, umfassend einen Verfahrensschritt, bei welchem Lab beigegeben wird, einen Verfahrensschritt, bei welchem die Dickmilch geschnitten wird, einen Verfahrensschritt, bei welchem durch Tauchen in eine an Magnesiumchlorid reiche Lösung gesalzen wird, dadurch **gekennzeichnet,** dass dem Verfahrensschritt des Schneidens der Dickmilch ein Rührvorgang und ein Waschvorgang von einer Zeitdauer von 10 mn bis 40 mn folgt, bis das Volumen der Dickmilch auf ungefähr die Hälfte reduziert ist, dass der Verfahrensschritt des Salzens in einer Lösung durchgeführt wird, die hinsichtlich der Gewichtsverhältnisse etwa 700 g Magnesiumchlorid auf 1700 g Wasser aufweist, und dass er durch Tauchen in einem Trog und durch Bewegen der Lösung und des zu salzenden Käse in entgegengesetzten Richtungen für eine Zeitdauer von 2 mn bis 3 mn je nach Grösse des Käse erfolgt bei einer Temperatur von 13°C bis 15°C.

2. Verfahren nach Anspruch 1, dadurch **gekennzeichnet,** dass zum Bereiten der Salzlösung eine Gruppe von Salzen verwendet wird, die im wesentlichen die folgenden Zusammensetzung (nach Gewicht) hat :

$$MgCl_2, \ 6H_2O \qquad 800 \qquad g/l$$
$$MgSO_4 \qquad 26, \ 34 \qquad g/l$$
$$KCl \qquad 10 \qquad g/l$$
$$NaCl \qquad 10 \qquad g/l$$

wobei der Prozentsatz an $MgSO_4$ zwischen 3 und 3,5 % gehalten wird, und dass die Gruppe dieser Salze in Wasser gelöst wird, und zwar im Verhältnis (nach Gewicht) von 1/3 Salze auf 2/3 Wasser.

3. Verfahren nach Anspruch 1, dadurch **gekennzeichnet,** dass der Verfahrensschritt der Beigabe von Lab bei einer Temperatur der milch von 38°C erfolgt.

4. Verfahren nach Anspruch 1, dadurch **gekennzeichnet,** dass der Verfahrensschritt des Rührens mechanisch mittels eines Blattrührers durchgeführt wird.

5. Weichkäse, welcher nach dem Verfahren gemäss einem der Ansprüche 1 bis 4 hergestellt worden ist.

## Claims

1. A process for the production of soft cheeses with a practically zero sodium content and a high magnesium content comprising an operation of adding rennet, and an operation of cutting up the curd, and an operation of salting by immersion in a magnesium chloride-rich solution characterised in that the operation of cutting up the curd is followed by a stirring operation and a washing operation for a period of from 10 minutes to 40 minutes until the curd is reduced to about half its volume, the salting operation is carried out in a solution comprising approximately by weight 700 g of magnesium chloride for 1700 g of water, and it takes place by immersion in a tank and by displacement in counter-flow relationship of said solution and the cheeses to be salted for a period of from 2 minutes to 3 minutes depending on the size of the cheeses, at a temperature of 13°-15°C.

2. A process acording to claim 1 characterised by using for preparation of the salting solution a group of salts of substantially the following composition by weight:
$MgCl_2$, $6H_2O$      800 g/l
$MgSO_4$      26 34 g/l

6

| KCl | 10 g/l |
| NaCl | 10 g/l |

in wich the percentage of $MgSO_4$ is between 3 and 3.5 % and said group of salts is dissolved in water in a ratio by weight of 1/3rd of salts for 2/3rds of water.

3. A process according to claim 1 characterised in that the operation of adding rennet takes place at a temperature of the milk of 38°C.

4. A process according to claim 1 characterised in that the stirring operation is effected mechanically by means of a blade-type agitator.

5. A soft cheese produced in accordance with the process of any one of claims 1 to 4.

Fig. 1

Fig. 2

EP 0 356 274 B1

*Fig. 3*

*Fig. 4*